# EUROPEAN PATENT SPECIFICATION

(11) **EP 0 373 883 B1**
(45) Date of publication and mention of the grant of the patent: **06.03.1996**
(21) Application number: 89312967.6
(22) Date of filing: 12.12.1989
(51) Int. Cl.: C08F 212/08, B01J 19/24

(54) **Continuous mass polymerization process for making styrene copolymers**
Kontinuierliches Massen-Polymerisationsverfahren zur Herstellung von Styrol-Polymeren
Procédé de polymérisation continue en masse pour la préparation de copolymères de styrène

(30) Priority: 12.12.1988 JP 312112/88
(43) Date of publication of application: 20.06.1990
(73) Proprietor: DAINIPPON INK AND CHEMICALS, INC., Itabashi-ku Tokyo (JP)
(72) Inventor: Miura, Yoshikiyo, Chiba-shi Chiba-ken (JP); Shimazu, Kyotaro, Chiba-shi Chiba-ken (JP)
(74) Representative: Cresswell, Thomas Anthony

(56) References cited:
- EP-A- 0 307 238
- GB-A- 640 836
- US-A- 3 035 033

## Description

This invention relates to a process for producing copolymers of copolymerizable unsaturated carboxylic acids and styrenic monomers which excel in transparency, heat resistance and moldability and are useful as injection-molding and or extrusion molding materials.

Polystyrene resins and acrylic resins have been known as transparent resins having excellent moldability. They, however, have the defect of being inferior in heat resistance, particularly in heat distortion temperature.

On the other hand, polycarbonate resins are known as thermoplastic resins having both heat resistance and transparency. However, these resins have not come into widespread acceptance because of their poor moldability and high price.

For these reasons, as resins having improved heat resistance while retaining the excellent moldability and transparency of polystyrene resin, copolymer resins formed by copolymerization of styrene with acrylic or methacrylic acid have been proposed.

GB-A-640836 relates to a process for manufacturing copolymers of styrene and unsaturated carboxylic acids.

Suspension methods and continous polymerization methods are generally used for production of such copolymer resins. A suspension polymerization method is disclosed, for example, in Japanese Laid-Open Patent Publication No. 85184/1974. A continuous polymerization method is disclosed, for example, in U. S. Patent No. 3,085,033.

The suspension polymerization method can give the product of excellent heat resistance and processability. However, since it uses a dispersing agent, the resin is liable to undergo coloration. Furthermore, since it is carried out batchwise, its productivity is low. For those reasons, continuous polymerization is regarded to be more desirable.

In preparing copolymers by continuous polymerization, generally for the preparation of copolymers composed of at least two monomeric components it is desirable that the monomeric structure in the formed copolymer be uniform throughout individual polymer molecules. Taking a case of a styrene-methacrylic acid copolymer, for example, if the weight ratio of styrene to methacrylic acid in the copolymer as a whole is 90:10, the copolymer may be a mixture of styrene homopolymer and a styrene-methacrylic acid copolymer containing more than 10 wt % of methacrylic acid; or it may be an ideal styrene-methacrylic acid copolymer all the polymer molecules of which contain 10 wt % of methacrylic acid.

If the physical properties of two such copolymers are compared, the former is a mixture of two different types of polymers substantially differing in polarity, and because the two component polymers cannot be intimately blended, shaped articles formed therefrom are inferior in transparency and have markedly reduced commercial value due to appearance of flow marks. On the other hand, the latter can be regarded as a copolymer in true sense, which gives highly transparent products.

For this reason it is desirable that the composition of polymer molecules in a copolymer be as uniform as possible.

EP-A-307238 relates to a process for continuous polymerisation of styrene and an acrylic monomer. The polymerisation apparatus comprises a circulating line and a main polymerisation line.

Whereas it is by no means easy to form copolymers of uniform composition. Again taking copolymerization of styrene with methacrylic acid for example, the two monomers have different reaction rates. In radical copolymerization, consumption rate of methacrylic acid is about twice that of styrene, and hence if they are simply mixed and polymerized polymer molecules of differing compositions would form as in the former case and only shaped articles of inferior transparency can be obtained.

As a means to solve this problem, attempts have been made to use a looped tubular reactor(s) as taught in U. S. Patent No. 3,035,033 and by compulsory circulation of a reaction liquid therethrough to mix starting materials supplied with the reaction liquid to uniformize the monomeric composition in the formed copolymer.

This method however is subject to other problems.

One of the problems lies in the mixing. In order to satisfactorily well mix fed starting materials with the reaction liquid, a sufficient amount of circulating liquid to the fed materials must always be secured. However, when such a high-speed circulation is conducted, the pressure inside the reactor rises with increase in viscosity of the reaction liquid, and capacity of the circulation pumps must also be increased. These factors unavoidably incur certain limitations, and an invention of a more efficient mixing method has been in demand.

Another problem is that of productivity. With the use of such a looped circulation reactor alone it is difficult to raise viscosity of the circulating system inside the reactor because of the aforesaid problem of viscosity versus mixing ability. In other words, it is difficult to raise polymer content of the reaction liquid, which results in low productivity. Again the load on the volatilizing section subsequent to the reaction section is increased. Thus according to said U. S. Patent No. 3,035,033, currently obtainable polymer content is around 50-60 % by weight.

Still another problem is the quantity of sub-standard products formed at the time of changeover when copolymers of different compositions are manufactured with same and single reactor.

When copolymers of different compositions are manufactured with a same reactor, for example, during a changeover from a copolymer containing 5 wt % of methacrylic acid to one containing 10 wt % of said acid, copolymers of which methacrylic acid contents vary in the range from 5 wt % to 10 wt % are continuously produced. To make matters worse, styrene-methacrylic copolymers of different methacrylic acid contents are immiscible with each other, and their mixtures become non-transparent. For example, if a copolymer containing 10 wt % of methacrylic acid is mixed with about 10 wt % thereof of another copolymer containing 7.5 wt % of methacrylic acid, the former's transparency is heavily impaired. Such a problem however is nil with polystyrene.

Thus it is desirable that the quantity of the sub-standard product formed at the time of changeover in copolymer compositions should be the possible minimum. Whereas, in Example 1 of U. S. Patent No. 4,195,169 using the reactor disclosed in aforesaid U. S. Patent No. 3,035,033, at least three times the residence time was required before the molecular weight drop caused by addition of an alcohol was stabilized.

Under the state of art as above, we had made extensive studies to solve those problems, to discover that the mixing can be effectively conducted, drop in productivity can be prevented and furthermore the amount of substandard products formed at times of changeover can be reduced, by the use of a circulating polymerization line in which at least one tubular reactor with plural mixing elements fixed therein is incorporated, said mixing elements having no mobile parts, and a second polymerization line provided in succession to said circulation polymerization line, which is composed of at least one tubular reactor with plural mixing elements fixed therein, said mixing elements having no mobile parts, and came to complete the present invention.

Namely the present invention provides a continuous mass polymerization method for producing a styrenic copolymer containing more than 4% by weight of polymerisable unsaturated carboxylic acid which process comprises the steps of continuously
(A) polymerizing at least one styrenic monomer and at least one unsaturated carboxylic acid by feeding them into a circulation polymerization line (I) comprising at least one tubular reactor with plural mixing elements fixed therein, said mixing elements having no mobile parts,
(B) passing a major part of polymerization liquid which flows out of the polymerization line (I) to an inlet of non-circulation polymerization line (II) which is provided in succession to polymerization line (I), incorporating at least one tubular reactor with plural mixing elements fixed therein and at least one feed spot provided before said tubular reactor, said mixing elements having no mobile part,
(C) supplementing 0.05 to 10 parts by weight unsaturated carboxylic acid per one feed spot per 100 parts by weight of the polymerization liquid flowing through the tubular reactor, and
(D) conducting polymerization in the polymerization line (II).

Styrenic monomers useful for the present invention include styrene and its derivatives such as alpha-methylstyrene, o-chlorostyrene, p-chlorostyrene, p-methylstyrene, 2,4-dimethylstyrene, t-butylstyrene and the like, styrene being the most preferred.

Typical polymerizable unsaturated carboxylic acids useful for the present invention include acrylic, methacrylic, itaconic, maleic, fumaric and cinnamic acids, acrylic acid and/or methacrylic acid being the most preferred.

Those unsaturated carboxylic acids show an effect of improving heat resistance. They are normally used within a range of 0.5-50 % by weight of total monomers, preferably 1-40 % by weight for excellent heat resistance and moldability, inter alia, 2-35 % by weight.

According to the present invention, besides styrenic monomers and polymerizable carboxylic acids, other monomers copolymerizable therewith may be added. Typical examples of such other monomers include maleic anhydride, acrylonitrile, acrylic acid alkyl esters, methacrylic acid alkyl esters and maleimides.

It is also possible to use suitable organic solvents for practising the present invention. Typically such organic solvents as aromatic hydrocarbons, eg, toluene, ethylbenzene and xylene, ketone organic solvents eg, methyl ethyl ketone and methyl isobutyl ketone; ether organic solvents eg, dimethylcellosolve and monomethyl-celloselve; can be used.

Suitable organic peroxides may also be used for practising the present invention. Typically such peroxides as peroxyketals eg, 1,1-di-t-butylperoxycyclo-hexane, 1,1-di-t-butylperoxy-3,3,5-trimethylcyclohexane, 2,2-di-t-butylperoxyoctane, n-butyl-4,4-di-t-butylperoxy-valerate and 2,2-di-t-butylperoxybutane; and peroxy esters eg, t-butylperoxyacetate, t-butylperoxy-3,5,5-trimethylhexanoate, t-butylperoxylaurate, t-butylperoxy-benzoate, di-t-butyldiperoxyisophthalate, 2,5-dimethyl-2,5-dibenzoylperoxyhexane, t-butylperoxymaleic acid and t-butylperoxyisopropyl carbonate; may be used. These can be used either singly or in combination.

Furthermore according to the present invention, the rate of polymerization or molecular weight of the product can be regulated by using alpha-methylstyrene dimer or mercaptanes such as t-dodecylmercaptane, n-dodecylmercaptane as molecular weight-regulating agents.

The tubular reactors used in the present invention are the ones in which plural mixing elements are fixed therein, said elements having no mobile parts. As the plural mixing elements, those which mix polymerization liquid by repeating division of polymerization liquid flow fed into the tube, changing the direction of flow and/or direction of the division, and combining the divided flows, can be used. As such tubular reactors, for example, Sulzer-type tubular mixers, Kenics-type static mixers and Toray-type tubular mixers are preferred.

Number of tubular reactors to be used in the present invention differs depending on such conditions as, when Sulzer-type tubular mixers or Kenics-type static mixers are employed, length of the employed mixer, number of mixing elements, and the like. It is satisfactory that at least one of such reactors is incorporated in each of the circulation polymerization line (I) and a second polymerization line (II), and the number is subject to no critical limitation. Normally, however, 4 to 15, preferably 6 to 10, mixers each having at least 5, preferably 10 to 40, mixing elements are used in combination. Normally 1 to 10, preferably 2 to 6, of such mixers each are incorporated in the circulation polymerization line (I) and second polymerization line (II).

In order to make copolymers of polymerizable unsaturated carboxylic acids and styrenic monomers by the continuous mass polymerization method of the present invention, at least one of polymerizable unsaturated carboxylic acid and at least one styrenic monomer are continuously fed to the circulation polymerization line (I) either as a blend or separately, and are polymerized in said line (I) while being throughly mixed therein. It is also permissible to incorporate a reactor in front of the entrance into the line (I) to effect partial polymerization in said reactor and thereafter feed the partially polymerized system to the circulation polymerization line (I).

The starting materials fed into the line (I) are continuously combined and mixed with the polymerization liquid which is being circulated through the line (I) while being polymerized and mixed (This liquid will be hereinafter referred to as "the initial polymerization liquid"), and undergo initial polymerization and mixing in the tubular reactor while being circulated, normally at reaction temperatures of 110 to 140 °C.

A part or the greatest part of the polymerization liquid circulating through the line (I) continuously flows into the second polymerization line (II), and the remaining initial polymerization liquid continues to circulate through the line (I).

The ratio R (reflux ratio) of the flow rate (reflux rate) F₁ (liter/hour) of the remaining initial polymerization liquid which continues to circulate through the line (I), not flowing into the second polymerization line (II), to the flow rate F₂ (liter/hour) of the initial polymerization liquid flowing into the second polymerization line (II) is normally within a range of R=F₁/F₂=1 to 40, preferably 5 to 20.

It is preferred that in this circulation polymerization line (I) the initial polymerization liquid should be polymerized while being thoroughly mixed. For this purpose, the polymer content of the initial polymerization liquid within the line (I) is normally kept within a range of 10 to 60 % by weight, more preferably 25 to 45 % by weight, for an adequate viscosity and favorable balance between the mixing efficiency and productivity.

The initial polymerization liquid which flows into the second polymerization line (II) is polymerized normally under escalating reaction temperature until the polymer content reaches 70 to 90 % by weight normally at 110 to 160 °C, then removed of unreacted monomers and solvent in, for example, a volatilization vessel under reduced pressure, and thereafter pelletized. The second polymerization line (II) is provided for raising the polymer content of the polymerization liquid which could not be sufficiently raised in the circulation polymerization line (I) for the necessity of thorough mixing of initial polymerization liquid. In this second line the polymer content becomes high and the viscosity rises, but the pressure within the system can be kept down within practical limit (normally 5 to 50 kg/cm) by reducing the flow rate in the reactor(s) from that in the line (I).

On the other hand, in the second polymerization line (II), a problem of non-uniform polymer composition may occur. When the content of polymerizable unsaturated carboxylic acid in the polymer is no more than 4% by weight, normally physical properties of the polymer are not seriously affected, but when it exceeds 4% by weight, transparency of the polymer may be impaired due to non-uniform polymer composition. In order to prevent this, for preparing copolymers of which polymerizable unsaturated carboxylic acid content exceeds 4% by weight, the polymerizable unsaturated carboxylic acid is supplemented to the second polymerization line (II) at a spot or plural spots to polymerize them, while quickly mixing the acid with the polymerization liquid in the tubular reactor(s).

In that occasion, concentration of the polymerizable unsaturated carboxylic acid to be supplemented may be 100% by weight but when it is diluted before the addition to the line (II) with an organic solvent as above-named and/or a styrenic monomer, preferably styrene, to 75 to 5% by weight, preferably 60 to 7% by weight, a copolymer excelling in transparency and producing no flow mark in the course of molding can be obtained, and therefore, such dilution is preferred. In a particularly preferred practice, furthermore, a polymerization inhibitor is added to the polymerizable unsaturated carboxylic acid within a range of 30 to 400 ppm, resulting in provision of a copolymer excelling in tansparency and free form flow mark formation during molding, without any reduction in polymerization rate or coloring.

As the polymerization inhibitors useful for this purpose, for example aromatic compounds containing benzene rings substituted with at least one hydroxyl group can be named. Typical examples include tertiary butyl catechol, hydroquinone, p-methoxyphenol, p-ethoxy-phenol, 2,4-dimethyl-6-tertiary butylphenol, etc.

The feed amount of polymerizable unsaturated carboxylic acid to be additionally supplied is so determined as to make the polymerizable unsaturated carboxylic acid content of the copolymer formed in each of the tubular reactors as uniform as possible, generally to make the content within a range of ±30% by weight, preferably ±15% by weight, to the intended final polymerizable unsaturated carboxylic acid content. This feed amount of polymerizable unsaturated carboxylic acid is normally calculated for individual case based on the value of relative reactivity ratio known from copolymerization theory, or experimentally determined.

So determined feed amount of the polymerizable unsaturated carboxylic acid is within a range of 0.05 to 10 parts, perferably 0.1 to 7.5 parts, inter alia, 0.2 to 5 parts, per single feed spot, per 100 parts by weight of the polymerization liquid flowing through the tubular reactor, the parts being by weight.

Again, the number of spots at which the polymerizable unsaturated carboxylic acid is supplemented should be at least one, normally 2 to 10, preferably 3 to 8.

Copolymer resins prepared in accordance with the present invention are processable as they are, by injection molding, extrusion molding or the like, but if necessary known and customarily used various additives such as ultraviolet absorbing agents, antioxidants, heat-stabilizers, plasticizing agents or lubricants or the like can be added within a range as will not adversely affect the copolymer performance.

Thus obtained styrenic copolymers of the present invention can be subjected to molding procedures of thermoplastic resins, whereby providing various shaped articles, eg, extrusion-molded articles such as film, sheet or board; biaxially stretched extrusion-molded articles such as biaxially stretched sheet or biaxially stretched film; foamed extrusion- molded articles such as foamed sheet and foamed board; and blow-molded articles or injection-molded articles.

Hereinafter the present invention will be more specifically explained with reference to working examples and control examples, in which parts and percentages are by weight, unless otherwise specified.
Fig. 1 is a flow sheet indicating the process for making styrene copolymers of the present invention;
Fig. 2 illustrates a device for testing the haze of shaped products of styrenic copolymers obtained through the method of the Present invention.

### Examples 2 to 9 and Examples 1 and 10 (Comparative)

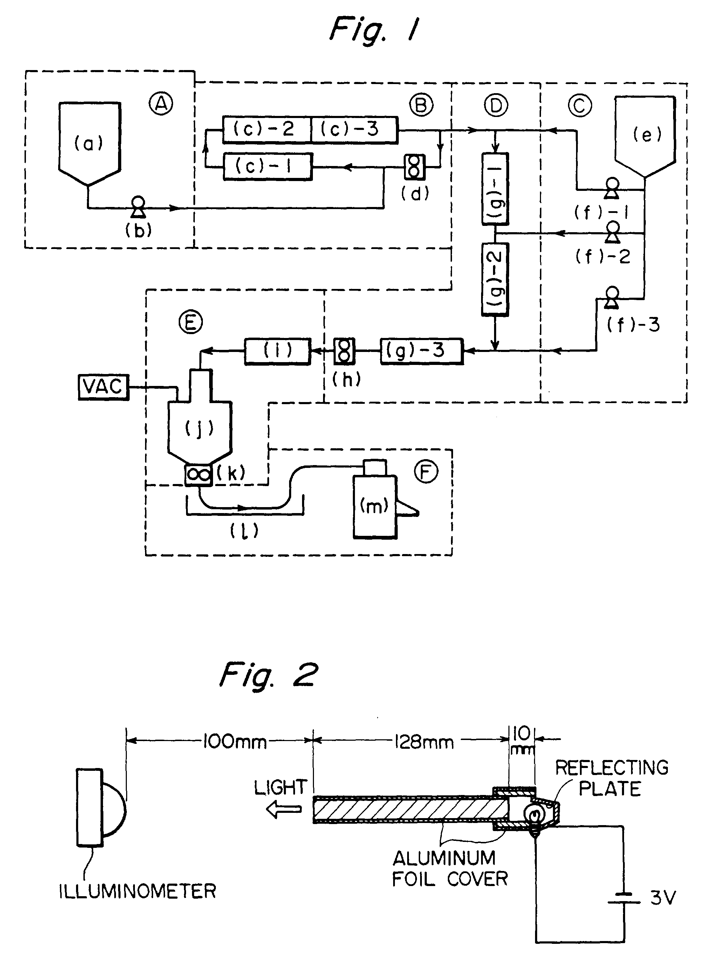

The polymerization vessel employed in Examples 1 - 9 is composed of sections (A) - (F), as illustrated in Fig. 1. Each of those sections will be explained hereinbelow.
- Section (A): Section (A) is a main starting material-supplying section, which is composed of a tank (a) of 100 liters in capacity and a feed pump (b) for supplying the starting material in the tank to a reaction section.
- Section (B): Section (B) is a circulation polymerization line (I) for initial polymerization and is composed of three tubular reactors [(c)-1 to (c)-3] manufactured by Sulzer Co, each of which accommodates therein mixing elements,is 7.2-liters in capacity and equipped with a jacket, and a gear-pump (d) for circulating the initial poly merization liquid. Temperature in each of the tubular reactors is controlled with a heating medium.
The main starting material fed into this section (B) from the main material supply section (A) is fed from the discharging side of the gear pump (d), and is polymerized while passing through the three tubular reactors. Also an equal weight to that of the main material fed into this section (B) of and initial polymerization liquid is pushed out into the second polymerization line (II), the remaining initial polymerization liquid being returned to the suction side of the gear pump (d), combined with the main material fed continuously and further circulated.
- Section (C): Section (C) is a second starting material-supplying section into the second polymerization line (II). This section is composed of a material tank (e) of 30-liters in capacity and three quantitative pumps [(f)-1 to (f)-3] for supplying the starting material to the line (II).
- Section (D): Section (D) is the second polymerization line (II), which is composed of three jacketted tubular reactors [(g)-1 to (g)-3] made by Sulzer having a capacity of 7.2 liters and containing mixing elements accommodated therein, and a gear pump (h) for transferring the polymerization liquid to a volatilization section (E). In front of each of the tubular reactors a feedline is connected for supplying the starting material from the second material-supplying Section (C). Temperature in the tubular reactors is each independently controlled with a heating medium.
- Section (E): Section (E) is a section for separating the polymer in the polymerization liquid supplied from the second polymerization line (II) from unreacted monomers and solvent, which is composed of a heat exchanger (i) for raising the temperature of the polymerization liquid to 200°C or above, a volatilization tank (j) for separating the polymer from volatile portion under reduced pressure, and s gear pump (k) for extracting the separated polymer from the volatilization tank. The polymer is fed from the gear pump (k) to a pelletizing Section (F), and the volatile component is condensed in a condenser.
- Section (F): Section (F) is provided for pelletizing. The polymer extracted from the volatiliza tion tank in form of a strand is cooled in a water tank (1) and pelletized with a cutter (m).

Using a polymerization apparatus as above, continuous mass polymerization was conducted with the compositions of the starting-material and under conditions indicated in Table 1, to provide pellets of styrene copolymers. Using so obtained pellets and polystyrene resin pellets [DIC STYRENE CR-3500, a commercial product of Dainippon Ink Chemical Industries, Co.], thermal deformation temperature, occurrence of flow marks, and opacity in test pieces were examined in the following manner.
1 Thermal deformation temperature: ASTM D-648 (264 psi) is followed.
2 Occurrence of flow marks: A 200 x 120 x 20 mm radio cabinet was shaped with a 4-oz injection molding machine [a screw-type (V20-140 Model)] manufactured by Nihon Seikojo K.K.] and occurrence of flow marks on which was graded with visual observation.
3 Haze of shaped articles: As for haze of shaped articles, in order to evaluate light transmittability under conditions actually used on lamps, etc., a device as indicated in Fig. 2 was used. Light emitted from a miniature lamp was transmitted longitudinally through a test piece (128 x 12.8 x 6.4 mm) covered with an aluminum foil, and the illuminance at a fixed distance from the forward end of the test piece was measured.

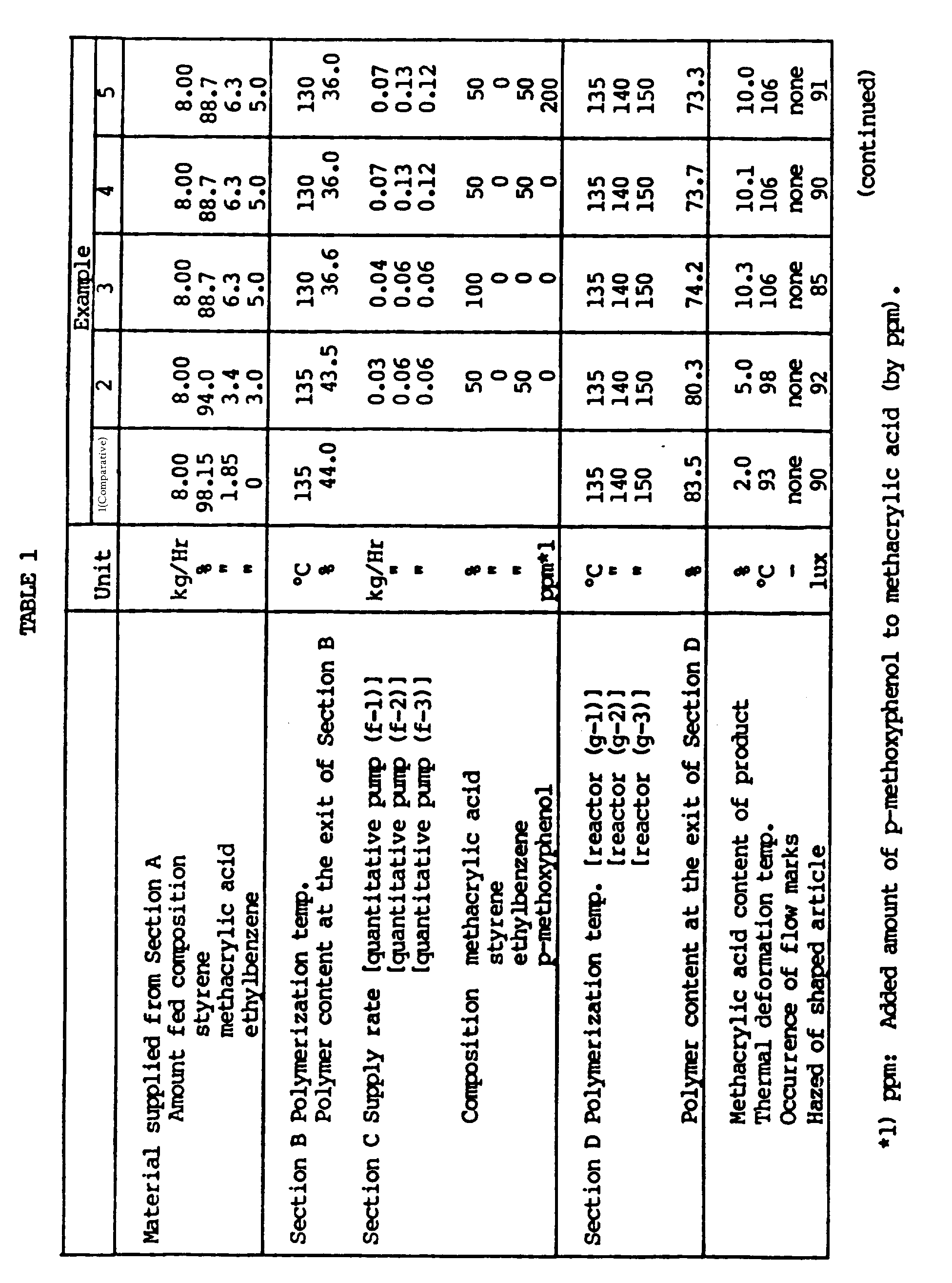

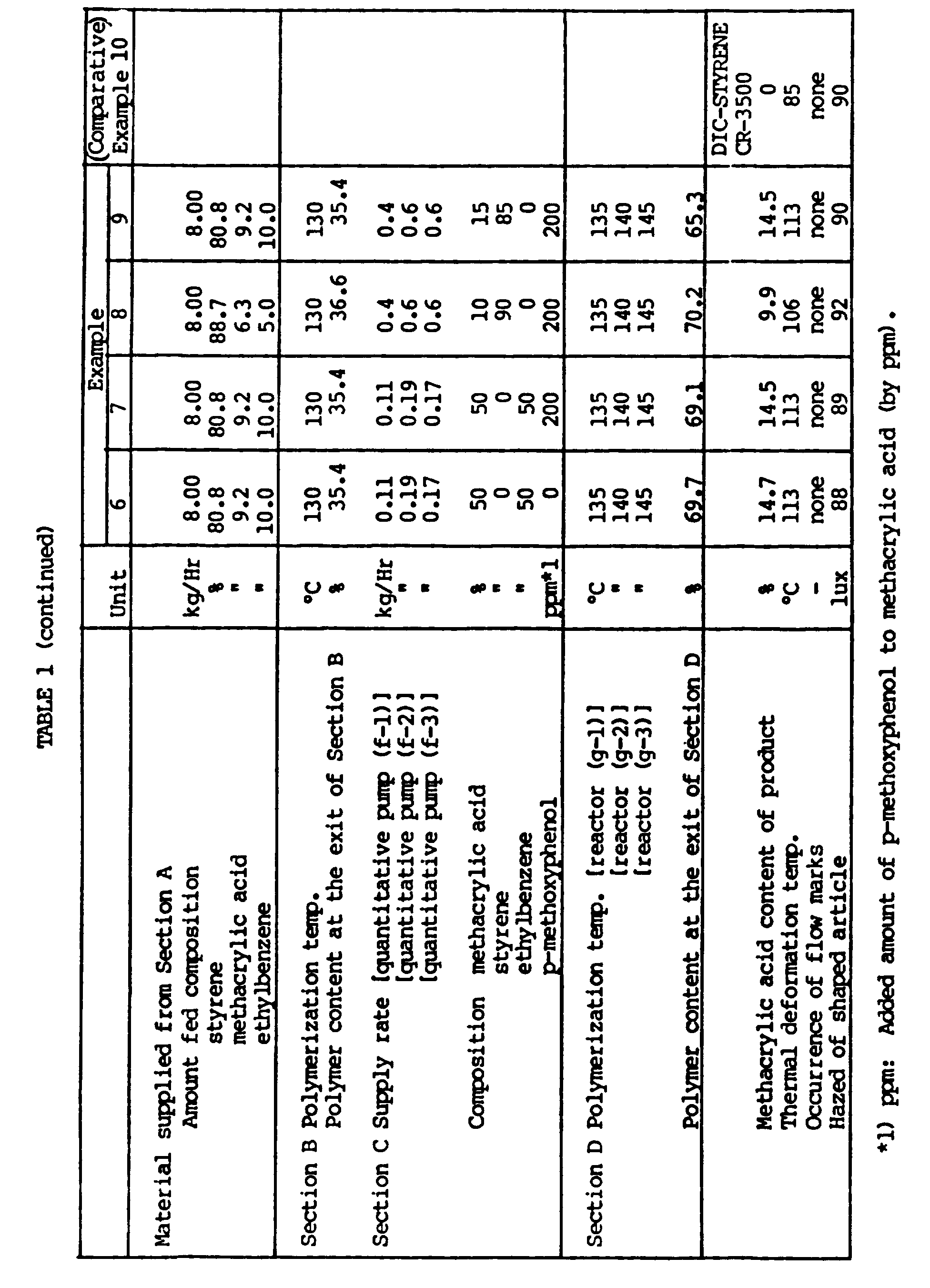

The results of Examples 1 to 9 indicate that the products according to the present invention exhibit improved heat resistance to that of conventional polystyrene (Comparative Example 10) and that excellent copolymers free from flow marks and shaped articles free from haze can be obtained therefrom.

Again, in any of those Examples, the polymer content of the polymerization liquid at the exit of polymerization section exceeded 65%, indicating that higher productivity can be obtained compared to that in the conventional art of US Patent No. 3,035,033, which is 50 to 60%.

When the time required for changeover from Example 2 for making a copolymer containing 5% of methacrylic acid to Example 4 for making a copolymer containing 10% of methacrylic acid was measured, it was as short as 9 hours, which is about twice the residence time, and the amount of sub-standard product formed was little.

The copolymers obtained by the present invention are well suited for injection molding and extrusion molding because, particularly when made into shaped articles they show no occurrence of flow marks and exhibit very high transparency. They show wide utilities, for example, covers of illuminating devices such as fluorescent lamp cover and a lamp shade; components of low-voltage electrical appliances, such as audio cassettes, compact discs, optical discs, parts of coffee makers and closures of driers; automobile parts such as prism lenses, inner lenses, lamps and lamp covers of car meters or car audios, windshields and ceiling materials of tractors; heat-resistant food containers such as noodle cups and steamable containers; food containers which can be heated in an electronic oven, for example, containers for various types of foods including chilled foods and dried foods and lunch boxes; medical instruments such as trays, artificial organs, animal keeping boxes and petri dishes; and components of a copying machine, such as lenses, trays and bins.

## Claims

1. A continuous mass polymerization method for producing a styrenic copolymer containing more than 4% by weight of polymerisable unsaturated carboxylic acid which process comprises the steps of continuously
(A) polymerizing at least one styrenic monomer and at lest one unsaturated carboxylic acid by feeding them into a circulation polymerization line (I) comprising at least one tubular reactor with plural mixing elements fixed therein, said mixing elements having no mobile parts,
(B) passing a part of polymerization liquid which flows out of the polymerization line (I) to an inlet of non-circulation polymerization line (II) which is provided in succession to polymerization line (I), incorporating at least one tubular reactor with plural mixing elements fixed therein and at least one feed spot provided before said tubular reactor, said mixing elements having no mobile part,
(C) supplementing 0.05 to 10 parts by weight unsaturated carboxylic acid per one feed spot per 100 parts by weight of the polymerization liquid flowing through the tubular reactor, and
(D) conducting polymerization in the polymerization line (II).

2. A method according to claim 1, in which the feed of polymerizable unsaturated carboxylic acid is supplemented to 2 to 10 spots in the second polymerization line (II).

3. A method according to claim 1 or 2 in which the polymerizable unsaturated carboxylic acid is supplemented after dilution with an organic solvent and/or a styrenic monomer.

4. A method according to any one of the preceding claims in which a polymerizable unsaturated carboxylic acid containing a polymerization inhibitor is supplemented.

5. A method according to any one of the preceding claims, in which the styrenic monomer is styrene, the polymerizable unsaturated carboxylic acid is acrylic acid and/or methacrylic acid, and a mixture of acrylic acid and/or methacrylic acid, styrene and a polymerization inhibitor is supplemented from at least one spot in the second polymerization line (II).

6. A method according to claim 5, in which the content of polymerization inhibitor is 30 to 400 ppm of the acrylic acid and/or methacrylic acid, and the concentration of said acrylic acid and/or methacrylic acid is 60 to 7 % by weight.

7. A method according to claim 5, in which acrylic acid and/or methacrylic acid is supplemented from 2 to 10 spots, in an amount per spot of 0.1 to 7.5 parts by weight per 100 parts by weight of the polymerization liquid flowing through the tubular reactor(s).

8. A method according to any one of the preceding claims in which the polymer content in the initial polymerization liquid in the circulation polymerization line (I) is 25 to 45 % by weight, and the polymer content in the polymerization liquid at the exit of the second polymerization line (II) is 70 to 90 % by weight.

9. A method according to any one of the preceding claims in which the reflux ratio R is 5 to 20.

## Patentansprüche

1. Kontinuierliches Massepolymerisationsverfahren zum Herstellen eines styrolischen Copolymers, das mehr als 4 Gew.-% an polymerisierbarer ungesättigter Carbonsäure enthält, wobei das Verfahren die Schritte umfaßt, kontinuierlich
(A) mindestens ein styrolisches Monomer und mindestens eine ungesättigte Carbonsäure zu polymerisieren, indem diese in eine Zirkulationspolymerisationslinie (I), die mindestens einen Rohrreaktor mit einer Mehrzahl Mischelemente, die in diesem befestigt sind, umfaßt, eingespeist werden, wobei die Mischelemente keine beweglichen Teile aufweisen,
(B) einen Teil einer Polymerisationsflüssigkeit, die aus der Polymerisationslinie (I) ausströmt, zu einem Einlaß einer Nichtzirkulationspolymerisationslinie (II) zu führen, die der Polymerisationslinie (I) nachgeschaltet vorgesehen ist und die mindestens einen Rohrreaktor mit einer Mehrzahl Mischelemente, die in diesem befestigt sind, und mindestens eine Einspeisstelle, die vor dem Rohrreaktor vorgesehen ist, umfaßt, wobei die Mischelemente keine beweglichen Teile aufweisen,
(C) 0,05 bis 10 Gewichtsteile ungesättigte Carbonsäure je Einspeisstelle auf 100 Gewichtsteile der Polymerisationsflüssigkeit, die durch den Rohrreaktor fließt, ergänzend hinzuzufügen und
(D) eine Polymerisation in der Polymerisationslinie (II) auszuführen.

2. Verfahren nach Anspruch 1,
in dem der Einspeisstrom aus polymerisierbarer ungesättigter Carbonsäure an 2 bis 10 Stellen in der zweiten Polymerisationslinie (II) ergänzend hinzugefügt wird.

3. Verfahren nach Anspruch 1 oder 2,
in dem die polymerisierbare ungesättigte Carbonsäure nach einer Verdünnung mit einem organischen Lösemittel und/oder einem styrolischen Monomer ergänzend hinzugefügt wird.

4. Verfahren nach einem der vorangegangenen Ansprüche,
in dem eine polymerisierbare ungesättigte Carbonsäure, die einen Polymerisationsinhibitor enthält, ergänzend hinzugefügt wird.

5. Verfahren nach einem der vorangegangenen Ansprüche,
in dem das styrolische Monomer Styrol ist, die polymerisierbare ungesättigte Carbonsäure Acrylsäure und/oder Methacrylsäure ist und eine Mischung von Acrylsäure und/oder Methacrylsäure, Styrol und einem Polymerisationsinhibitor von mindestens einer Stelle in der zweiten Polymerisationslinie (II) aus ergänzend hinzugefügt wird.

6. Verfahren nach Anspruch 5,
bei dem der Gehalt an Polymerisationsinhibitor 30 bis 400 ppm der Acrylsäure und/oder Methacrylsäure und die Konzentration der Acrylsäure und/oder Methacrylsäure 60 bis 7 Gew.-% beträgt.

7. Verfahren nach Anspruch 5,
bei dem Acrylsäure und/oder Methacrylsäure von 2 bis 10 Stellen aus in einer Menge von 0,1 bis 7,5 Gewichtsteilen pro Stelle auf 100 Gewichtsteile der Polymerisationsflüssigkeit, die durch den bzw. die Rohrreaktor(en) strömt, ergänzend hinzugefügt wird.

8. Verfahren nach einem der vorangegangenen Ansprüche,
in dem der Polymergehalt in der anfänglichen Polymerisationsflüssigkeit in der Zirkulationspolymerisationslinie (I) 25 bis 45 Gew.-% und der Polymergehalt in der Polymerisationsflüssigkeit am Ausgang der zweiten Polymerisationslinie (II) 70 bis 90 Gew.-% beträgt.

9. Verfahren nach einem der vorangegangenen Ansprüche,
in dem das Rückflußverhältnis R 5 bis 20 beträgt.

## Revendications

1. Procédé continu de polymérisation en masse pour la production d'un copolymère styrénique renfermant plus de 4% en poids d'acide carboxylique insaturé polymérisable, procédé qui comprend les étapes consistant à réaliser en continu :
(A) la polymérisation d'au moins un monomère styrénique et d'au moins un acide carboxylique insaturé par introduction de ces composés dans une ligne de polymérisation avec recirculation (I), comprenant au moins un réacteur tubulaire, muni de plusieurs éléments mélangeurs fixés à l'intérieur, lesdits éléments mélangeurs ne présentant pas de partie mobile,
(B) l'envoi d'une partie du liquide de polymérisation qui sort de la ligne de polymérisation (I), à l'entrée d'une ligne de polymérisation sans recirculation (II), qui fait suite à la ligne de polymérisation (I) et qui comprend au moins un réacteur tubulaire, muni de plusieurs éléments mélangeurs fixés à l'intérieur, lesdits éléments mélangeurs ne présentant pas de partie mobile, et au moins un point d'alimentation situé avant ledit réacteur tubulaire,
(C) l'apport en complément de 0,05 à 10 parties en poids d'acide carboxylique insaturé par point d'alimentation, pour 100 parties en poids de liquide de polymérisation traversant le réacteur tubulaire, et
(D) la conduite de la polymérisation dans la ligne de polymérisation (II).

2. Procédé selon la revendication 1, dans lequel la quantité introduite d'acide carboxylique insaturé polymérisable est fournie en complément à 2 à 10 points d'alimentation, dans la seconde ligne de polymérisation (II).

3. Procédé selon la revendication 1 ou 2, dans lequel l'acide carboxylique insaturé polymérisable est introduit en complément après dilution avec un solvant organique et/ou un monomère styrénique.

4. Procédé selon l'une quelconque des revendications précédentes, dans lequel un acide carboxylique insaturé polymérisable, renfermant un inhibiteur de polymérisation, est introduit en complément.

5. Procédé selon l'une quelconque des revendications précédentes, dans lequel le monomère styrénique est le styrène, l'acide carboxylique insaturé polymérisable est l'acide acrylique et/ou l'acide méthacrylique, et un mélange d'acide acrylique et/ou d'acide méthacrylique, de styrène et d'un inhibiteur de polymérisation est introduit en complément par au moins un point d'alimentation, dans la seconde ligne de polymérisation (II).

6. Procédé selon la revendication 5, dans lequel la proportion d'inhibiteur de polymérisation est de 30 à 400 ppm par rapport à l'acide acrylique et/ou l'acide méthacrylique, et la concentration dudit acide acrylique et/ou acide méthacrylique est de 60 à 7% en poids.

7. Procédé selon la revendication 5, dans lequel de l'acide acrylique et/ou de l'acide méthacrylique est introduit en complément par 2 à 10 points d'alimentation, à raison de 0,1 à 7,5 parties en poids par point d'alimentation, pour 100 parties en poids de liquide de polymérisation traversant le ou les réacteurs tubulaires.

8. Procédé selon l'une quelconque des revendications précédentes, dans lequel la teneur en polymère du liquide de polymérisation initiale circulant dans la ligne de polymérisation avec recirculation (I), est de 25 à 45% en poids, et la teneur en polymère du liquide de polymérisation à la sortie de la seconde ligne de polymérisation (II) est de 70 à 90% en poids.

9. Procédé selon l'une quelconque des revendications précédentes, dans lequel le rapport de reflux R est égal à 5 à 20.
